# EUROPÄISCHE PATENTSCHRIFT

(11) **EP 3 284 157 B1**
(45) Veröffentlichungstag und Bekanntmachung des Hinweises auf die Patenterteilung: **08.05.2019**
(21) Anmeldenummer: 16709436.6
(22) Anmeldetag: 11.03.2016
(51) Int. Cl.: H02K 1/24

(54) **WINDENERGIEANLAGE UND POLPAKET FÜR EINEN SYNCHRONGENERATOR EINER WINDENERGIEANLAGE SOWIE SYNCHRONGENERATOR**
WIND ENERGY INSTALLATION AND POLE STACK FOR A SYNCHRONOUS GENERATOR OF A WIND ENERGY INSTALLATION AND SYNCHRONOUS GENERATOR
ÉOLIENNE ET EMPILAGE DE TÔLES POLAIRES POUR UN GÉNÉRATEUR SYNCHRONE D'UNE ÉOLIENNE AINSI QUE GÉNÉRATEUR SYNCHRONE

(30) Priorität: 13.04.2015 DE 102015206541
(43) Veröffentlichungstag der Anmeldung: 21.02.2018
(73) Patentinhaber: Wobben Properties GmbH, 26607 Aurich (DE)
(72) Erfinder: GIENGIEL, Wojciech, 26607 Aurich (DE)
(74) Vertreter: Eisenführ Speiser
(86) Internationale Anmeldenummer: PCT/EP2016/055225
(87) Internationale Veröffentlichungsnummer: WO 2016/165886

(56) Entgegenhaltungen:
- WO-A1-2012/107109
- WO-A2-2012/168238
- CN-U- 202 940 646

## Beschreibung

Die vorliegende Erfindung betrifft eine Windenergieanlage sowie Polpakete eines Synchrongenerators der Windenergieanlage und insbesondere die Polpaketbleche der Polpakete sowie einen Synchrongenerator einer Windenergieanlage.

Gemäß dem Stand der Technik sind Windenergieanlagen, insbesondere auch getriebelose Windenergieanlagen, bekannt. Windenergieanlagen werden durch einen aerodynamischen Rotor angetrieben, der unmittelbar mit dem Läufer eines Generators verbunden ist. Durch die Bewegung des Läufers im Generator wird die aus dem Wind gewonnene Bewegungsenergie in elektrische Energie umgewandelt. Der Läufer des Generators dreht sich demnach mit der gleichen langsamen Drehgeschwindigkeit wie der aerodynamische Rotor.

Zur Berücksichtigung einer solchen langsamen Drehzahl weist der Generator einen bezogen auf die Nennleistung verhältnismäßig großen Generatordurchmesser mit einem großen Luftspaltdurchmesser auf. Der Luftspalt ist auf der Läuferseite durch Polpakete begrenzt, wobei diese Polpakete aus einer Vielzahl von gestanzten Polpaketblechen bestehen, die aufeinander geschichtet und beispielsweise miteinander zu den Polpaketen verschweißt sind.

Gemäß dem Stand der Technik weisen die Polpaketbleche der Polpakete einen Polschaftbereich und einen Polkopfbereich auf, der über den Polschaftbereich seitlich hinausragt. Die hintereinander angeordneten Polschaftbereiche der Polpaketbleche der Polpakete werden mit einer Wicklung versehen und in diese Wicklung ein elektrischer Erregerstrom zugeführt. Dadurch wird mit den Polpaketen und den entsprechenden Wicklung zusammen mit dem Erregerstrom eine magnetische Erregung erzeugt. Diese magnetische Erregung führt dazu, dass die Polpakete mit der Wicklung als magnetische Pole des Läufers des Synchrongenerators dienen.

Hierzu ist es bekannt den Polkopfbereich üblicherweise so zu formen, dass ein im Wesentlichen konstanter und möglichst schmaler Luftspalt zwischen dem Polkopfbereich und dem Stator der Synchronmaschine vorliegt, damit der Betrag der magnetischen Kräfte, die im Läufer erzeugt werden und auf den Stator des Generators zur Energieerzeugung wirken, maximiert werden.

Derartige Generatoren weisen jedoch das Problem auf, dass sich Drehmomentschwankungen durch die am Läufer angeordneten Polpakete sowie die Lücken zwischen den Polpaketen ergeben, da hierdurch ein unstetiger Verlauf des Magnetfeldes entsteht, das nur durch die Polschuhe und Wicklungen erzeugt wird.

Diese Drehmomentschwankungen weisen üblicherweise eine von der Drehzahl des Läufers abhängige Frequenz auf und verursachen Schwingung im Generator, die sich auch auf andere Komponenten des Antriebsstrangs oder der Windenergieanlage übertragen können oder mit weiteren Schwingungen dieser Komponenten überlagern. Derartige Schwingungen können im Dauerbetrieb zur Beschädigung der Anlage sowie zu unerwünschter Geräuschentwicklung führen.

Es wurden bereits Anstrengungen unternommen, um diese Schwingungen zu minimieren, wobei hierzu eine Modifikation der Anordnung sowie der Geometrie der Wicklungen erfolgte. Derartige Anstrengungen führten jedoch bislang nicht zu den gewünschten Ergebnissen.

Daher ist es Aufgabe der vorliegenden Erfindung, die Drehmomentschwankungen eines Generators und hierdurch auftretende Schwingungen, die zur Beschädigung der Anlage sowie zu unerwünschter Geräuschentwicklung führen, zu glätten oder zumindest Einfluss auf die Frequenzen der sich aus den Schwingungen ergebenden überlagerten Schwingungen zu nehmen, sodass hierin enthaltende ungewünschte Frequenzen der Schwingungen minimiert werden.

Das Deutsche Patent- und Markenamt hat in der Prioritätsanmeldung zu vorliegender Anmeldung folgenden Stand der Technik recherchiert: WO 2012/168238 A2, US 2012/0080973 A1, WO 2012/107109 A1 und DE 10 2013 206 121 A1. Hierbei offenbart das Dokument WO 2012/107109 A1 einen Rotor einer elektrischen Maschine, der ein teilweise elliptisches Profil aufweist. Das weiter aufgefundene Dokument CN 202940646 U offenbart eine gerundete Oberseite eines Polkopfes.

Erfindungsgemäß wird die Aufgabe gelöst durch ein Polpaket für einen Synchrongenerator einer Windenergieanlage, das mehrere Polpaketbleche aufweist. Jedes der Polpaketbleche weist einen Polschaftbereich und einen Polkopfbereich auf. Der Polkopfbereich ragt über den Polschaftbereich seitlich hinaus. Ferner weist der Polkopfbereich eine zum Polschaftbereich hingewandte Seite und eine vom Polschaftbereich abgewandte Seite auf, wobei die Kontur des Polkopfbereichs auf der vom Polschaftbereich abgewandten Seite ellipsenförmig ist oder einen ellipsenförmigen Verlauf aufweist also einem Teil einer Ellipsenbahn entspricht oder gleicht, wobei die Kontur des Polkopfbereichs auf der vom Polschaftbereich abgewandten Seite und zusätzlich ein an diesen Bereich der Kontur anschließender Teil der Kontur des Polkopfbereichs, der nämlich über den Polschaftbereich hinausragt und zur der Seite des Polkopfbereichs, der zum Polschaftbereich hingewandt ist, hingewandt ist, ebenfalls ellipsenförmig ist oder dem Teil einer Ellipsenbahn entspricht. Somit sind Polpakete vorgesehen, deren Polpaketbleche jeweils einen Polkopfbereich aufweisen, der auf der Oberseite und in den Randbereichen des jeweiligen Polkopfbereichs eine ellipsenförmige Kontur aufweist. Durch eine derartige Kontur des Polkopfbereichs wird das durch die Polpakete und die Spulen erzeugte Magnetfeld derart beeinflusst, dass die Drehmomentschwankungen geglättet werden.

Eine Ellipse weist eine Hauptachse auf. Die Hauptachse entspricht einer Geraden, die durch den Mittelpunkt der Ellipse verläuft und die Hauptscheitel oder Hauptscheitelpunkte der Ellipsenkontur oder Ellipsenbahn verbindet, die nämlich den Punkten der Ellipsenkontur oder Ellipsenbahn entsprechen, die den größten Abstand voneinander auf der Ellipsenkontur oder Ellipsenbahn haben. Die Hauptachse wird durch den Mittelpunkt in die zwei großen Halbachsen geteilt.

Auf der Hauptachse steht senkrecht die Nebenachse und verläuft durch den Mittelpunkt der Ellipse. Die Nebenachse ist durch den Mittelpunkt in die zwei kleinen Halbachsen geteilt. Dementsprechend weist die Nebenachse die Nebenscheitel oder Nebenscheitelpunkte an der Stelle auf, an der die Nebenachse auf die Ellipsenkontur oder Ellipsenbahn trifft.

Die Kontur der erfindungsgemäßen Polpakete führt zu einem sich im Verlauf des Polkopfbereiches kontinuierlich verändernden Läufermagnetfeld. Entlang der Drehrichtung des Läufers gesehen, erfolgt also im Bereich der Polpakete eine stetige Änderung des Magnetfeldes, das zu den Randbereichen stärker als bei herkömmlichen Läufern abnimmt. Hieraus resultiert eine geringere Differenz der Magnetkräfte zwischen den Polpaketen sowie den dazwischen liegenden Lücken, wodurch wiederum die Drehmomentschwankungen reduziert bzw. geglättet werden.

Besonders vorteilhaft führt das erfindungsgemäße Polpaket zur Reduzierung und/oder Glättung der Drehmomentschwankungen bei Ringgeneratoren.

Für die erfindungsgemäße Ausgestaltung der Polpakete wird in Kauf genommen, dass ein erhöhter Erregerstrom im Läufer - aufgrund des betragsmäßig vergrößerten Luftspalts - für ein vergleichsweise gleiches Drehmoment wie beim Einsatz herkömmlicher Polpakete benötigt wird.

Gemäß einer weiteren Ausführungsform entspricht das Verhältnis der großen Halbachse der ellipsenförmigen Kontur des Polkopfbereichs zur kleinen Halbachse der ellipsenförmigen Kontur des Polkopfbereichs einem Wert im Bereich von 2 bis 8 oder 4 bis 6.

Nach einer weiteren vorteilhaften Ausführungsform entspricht das Verhältnis der großen Halbachse der ellipsenförmigen Kontur des Polkopfbereichs zur kleinen Hauptachse der ellipsenförmigen Kontur des Polkopfbereichs einem Wert im Bereich von 4,8 bis 5,2.

Gemäß einer weiteren Ausführungsform entspricht das Verhältnis der großen Halbachse der ellipsenförmigen Kontur des Polkopfbereichs zur kleinen Halbachse der ellipsenförmigen Kontur des Polkopfbereichs einem Wert von 5,1, insbesondere 5,125.

Diese genannten Verhältnisse der großen Halbachse zur kleinen Halbachse der ellipsenförmigen Kontur des Polkopfbereichs führen zu einer besonders vorteilhaften Minimierung der Drehmomentschwankungen, da eine besonders stetige Magnetfeldänderung im Bereich der Polpakete durch diese Form der Ellipse hervorgerufen wird.

Gemäß einer weiteren Ausführungsform weist ein Polpaket mehrere Polpaketsegmente auf, wobei jedes Polpaketsegment jeweils ein oder mehrere Polpaketbleche umfasst. Jeder Polschaftbereich der Polpaketbleche weist ferner eine erste Mittellinie und jeder Polkopfbereich der Polpaketbleche eine zweite Mittellinie auf. Der Abstand zwischen der ersten und der zweiten Mittellinie ist gemäß dieser Ausführungsform zumindest in zweien der zueinander benachbarten Polpaketsegmente unterschiedlich.

Durch diese zueinander versetzten Polpaketsegmente eines Polpakets werden Drehmomentschwankungen des Generators weiter geglättet.

Gemäß einer weiteren Ausführungsform sind die Polpaketsegmente in der Draufsicht pfeilförmig und/oder spiegelsymmetrisch ausgestaltet. Durch die pfeilförmige oder spiegelsymmetrische Ausgestaltung überlappen sich Randbereiche benachbarter Polpakete zumindest im Randbereich der Polkopfbereiche in horizontaler Richtung gesehen. Dadurch werden die Drehmomentschwankungen weiter geglättet.

Ferner umfasst die vorliegende Erfindung eine Windenergieanlage und einen Synchrongenerator für eine Windenergieanlage, nämlich einen Windenergieanlagen-Synchrongenerator, mit einem Stator und einem Läufer, nämlich einem Windenergieanlagen-Synchrongenerator-Läufer, und einer Mehrzahl von Polpaketen, nämlich Windenergieanlagen-Synchrongenerator-Läufer-Polpakete, nach einem zuvor genannten Ausführungsformen.

Gemäß einer weiteren Ausführungsform ist die Luftspaltbreite bzw. Weite zwischen dem Stator und dem Läufer in Umlaufrichtung gesehen im Bereich der Polpakete inkonstant und ändert sich also kontinuierlich oder stetig.

Ein derartiger Synchrongenerator weist ein besonders vorteilhaftes Verhalten in Bezug auf Drehmomentschwankungen durch eine vorteilhafte Glättung der Drehmomentschwankungen auf.

Vorteilhafte Ausführungsbeispiele der Erfindung werden nachstehend unter Bezugnahme auf die Zeichnung näher erläutert.
- Fig. 1: zeigt eine Windenergieanlage,
- Fig. 2: zeigt eine schematische Schnittansicht eines Polpakets gemäß einem ersten Ausführungsbeispiel der Erfindung,
- Fig. 3: zeigt eine Draufsicht auf ein Polpaket gemäß einem Ausführungsbeispiel der Erfindung und
- Fig. 4: zeigt eine seitliche Ansicht eines Polpakets gemäß einem Ausführungsbeispiel der Erfindung.

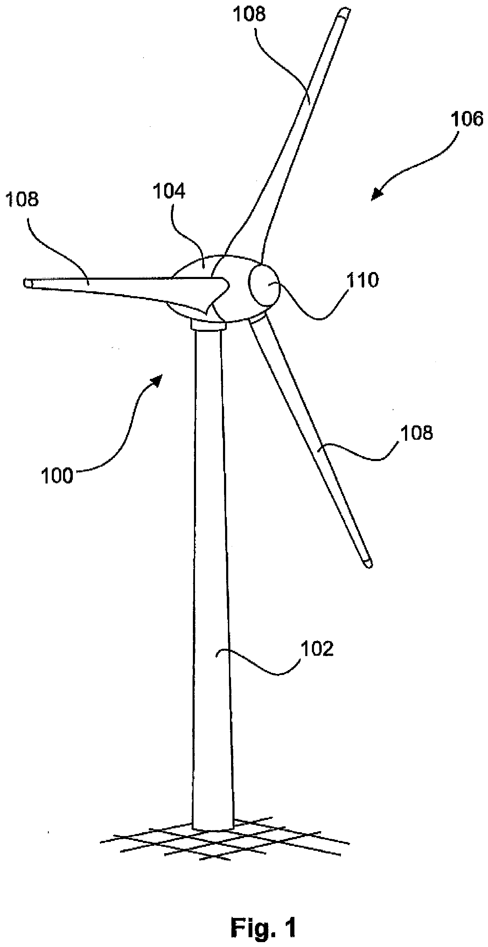

Figur 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, insbesondere eines Synchrongenerators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln 108b der jeweiligen Rotorblätter 108 verändert werden.

Die nachfolgend beschriebenen Polpakete werden für einen Läufer oder Rotor eines Synchrongenerators oder einen Läufer eines Ringgenerators verwendet.

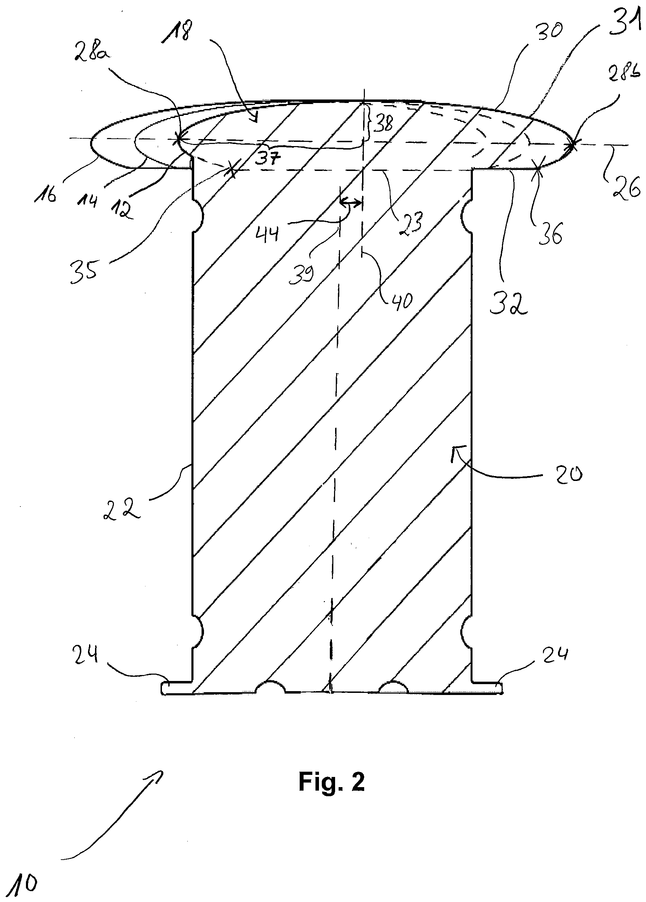

Figur 2 zeigt eine schematische Schnittansicht eines Polpakets eines Rotors oder Läufers eines Synchrongenerators gemäß einem ersten Ausführungsbeispiel der Erfindung. Das Polpaket 10 weist eine Anzahl von Polpaketsegmenten 12, 14, 16 auf. Jedes Polpaketsegment 12, 14, 16 weist ein Polpaketblech 22 oder mehrere identische Polpaketbleche 22 auf. Jedes Polpaketblech 22 weist einen Polkopfbereich 18 und einen Polschaftbereich 20 auf.

In Figur 2 sind der Polkopfbereich 18 und der Polschaftbereich 20 durch die Trennlinie 23 getrennt dargestellt, wobei diese Trennlinie 23 keine Naht im Polpaketblech 22 darstellt, sondern vielmehr zum besseren Verständnis dargestellt ist. Die Polpaketbleche 22 sind demnach vorzugsweise jeweils einstückig hergestellt und werden zur Herstellung insbesondere ausgestanzt. Der Polschaftbereich 20 ist im Wesentlichen rechteckförmig ausgestaltet und weist optional zwei Nasen 24 im unteren Bereich auf.

Der Polkopfbereich 18 ist entlang der strichlierten Linie 26, die durch die Scheitelpunkte 28a, 28b des ersten Polpaketsegments 12 verläuft, in einen oberen Teil 30 und einen unteren Teil 32 unterteilt. Der obere Teil 30 des Polkopfbereichs 18 entspricht hier einer vom Polschaftbereich 20 abgewandten Seite 30 und weist eine ellipsenförmige Kontur 31 auf, wobei auch der untere Teil 32, der einer zum Polschaftbereich 20 hinweisenden Seite 32 entspricht, zumindest teilweise eine ellipsenförmige Kontur 31 aufweist. Der Polkopfbereich 18 reicht seitlich über den Polschaftbereich 20 hinaus.

Demnach ist die Kontur 31 des Polkopfbereichs 18 auf der vom Polschaftbereich 20 abgewandten Seite 30, nämlich der oberen Seite 30 des Polkopfbereichs18, ellipsenförmig. Ferner ist auch ein daran anschließender Teil der Kontur 31 des Polkopfbereichs 18, der über den Polschaftbereich 20 hinausragt, und auf der Seite 32 des Polkopfbereichs 18, der zum Polschaftbereich 20 hinweist und damit dem unteren Teil 32 des Polkopfbereichs 18, entspricht, ellipsenförmig.

Für das dargestellte erste Polpaketsegment 12 weist der Polkopfbereich 18 demnach vom Punkt 35 entlang der Kontur 31 des Polkopfbereichs 18 im Uhrzeigersinn gesehen bis zum Punkt 36 eine ellipsenförmige Form auf.

Das Verhältnis der großen Halbachse 37 zur kleinen Halbachse 38 der ellipsenbahnförmigen Kontur des Polkopfbereichs entspricht einem Wert im Bereich von 4 bis 6.

Jedes der Polpaketsegmente 12, 14, 16 weist ein Polpaketblech 22 oder mehrere identische Polpaketbleche 22 auf, wobei die Polpaketschafte 20 der Polpaketsegmente 12, 14, 16 eine gemeinsame Mittellinie 39 aufweisen, während die Polkopfbereiche 18 der Polpakete 12, 14, 16 jeweils eine parallel zur Mittellinie 39 des Polschaftbereichs 20 verlaufende Mittellinie 40 aufweisen, die jeweils durch den Mittelpunkt der durch den Polkopfbereich gebildeten Ellipse verläuft. Diese Mittellinie 40 der Polkopfbereiche 18 von benachbarten Polpaketsegmente 12, 14, 16 weisen unterschiedliche Abstände zur Mittellinie 39 des Polschaftbereichs auf.

Demnach sind die Polkopfbereiche 18 benachbarter Polpaketsegmente 12, 14, 16 zueinander versetzt angeordnet. Demnach sind die relativen Positionen der Polschaftbereiche 20 eines Polpaketsegments 12, 14, 16 zu den jeweiligen Polkopfbereichen 18 in benachbarten Polpaketsegmenten 12, 14, 16 unterschiedlich.

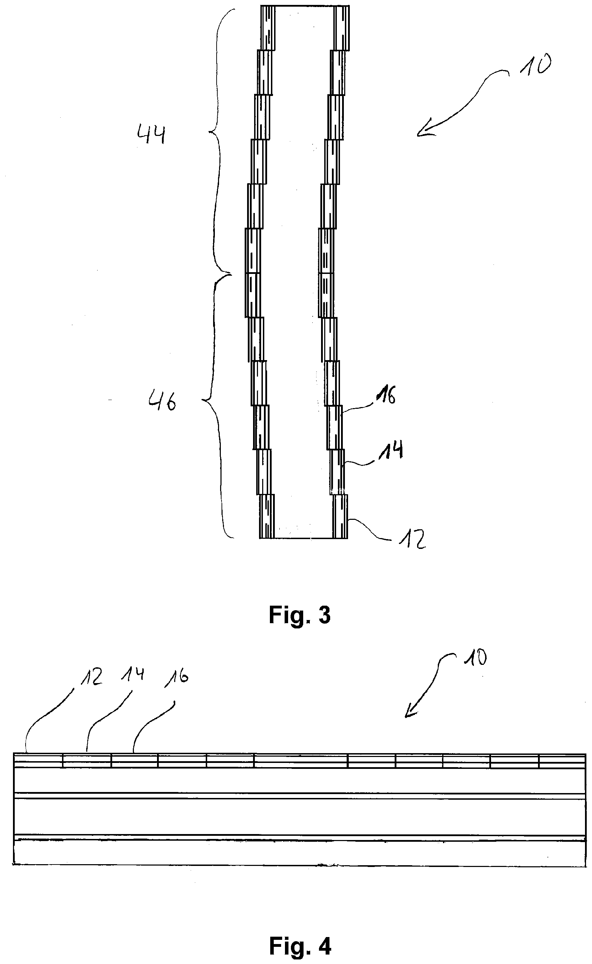

Figur 3 zeigt eine schematische Draufsicht auf ein Polpaket 10 mit einer Mehrzahl von Polpaketsegmenten 12, 14, 16, wobei die Polpakete 10 im oberen Bereich 44 spiegelsymmetrisch zu den Polpaketen 10 im unteren Bereich 46 angeordnet sind. Das gesamte Polpaket 10 weist eine pfeilförmige Anordnung auf.

Figur 4 zeigt eine Seitenansicht auf das Polpaket 10. Die Polpakete 10 gemäß der Erfindung werden jeweils mit einer Wicklung versehen und dieser Wicklung wird ein elektrischer Strom zugeführt, sodass die Polpakete 10 und die entsprechende Wicklung zusammen mit einem Erregerstrom eine magnetische Erregung erzeugen. Diese magnetische Erregung führt dazu, dass das Polpaket 10 mit der Wicklung als magnetischer Pol dient. Demnach wird der Pol einer elektrischen Maschine mit einem Polpaket 10, einer Wicklung und einem Erregerstrom ausgebildet.

Gemäß einer Ausführungsform sind die Polpaketbleche 22 mittels Trennverfahren hergestellt, wobei das Trennen ein Ausstanzen, ein Lasern, ein Wasserstrahlschneiden oder ein Ausschneiden beinhaltet. Das Polpaket 10 gemäß der Erfindung dient auf einem Läufer eines Synchrongenerators, insbesondere eines fremderregten Synchrongenerators, zur Erregerfelderzeugung.

Der Synchrongenerator der erfindungsgemäßen Windenergieanlage, also der Windenergieanlagen-Synchrongenerator, ist vorzugsweise ein Ringgenerator bzw. eine Synchron-Ringgenerator. Ein solcher vielpoliger Synchron-Ringgenerator einer getriebelosen Windenergieanlage weist eine Vielzahl von Statorpolen auf, insbesondere wenigstens 48 Statorzähne, häufig sogar deutlich mehr Statorzähne wie insbesondere 96 Statorzähne oder noch mehr Statorzähne.

Der magnetisch aktive Bereich des Ringgenerator, nämlich sowohl des Rotors, der auch als Läufer bezeichnet werden kann, als auch des Stators ist in einem ringförmigen Bereich um die Drehachse des Synchrongenerators angeordnet. So ist insbesondere ein Bereich von 0 bis wenigstens 50 Prozent des Radius des Luftspalts frei von Materialien, die elektrischen Strom oder elektrisches Feld des Synchrongenerators führen. Insbesondere ist dieser Innenraum vollständig frei und grundsätzlich auch begehbar. Häufig beträgt dieser Bereich auch mehr als 0 bis 50 Prozent des Luftspaltradius, insbesondere bis zu 0 bis 70 Prozent oder sogar 0 bis 80 Prozent des Luftspaltradius. Je nach Aufbau kann eine Tragstruktur in diesem inneren Bereich vorhanden sein, die aber in einigen Ausführungen axial versetzt ausgebildet sein kann.

Gemäß der Erfindung werden die Polpakete bei einem Synchrongenerator-Rotor bzw. Synchrongenerator-Läufer oder bei einem Ringgenerator-Rotor bzw. Ringgenerator-Läufer verwendet. Sowohl der Synchrongenerator als auch der Ringgenerator stellen ein sich langsam drehender Synchrongenerator mit einer Drehzahl von weniger als 30, 25 oder sogar 20 Umdrehungen pro Minute dar.

Der Durchmesser des Synchrongenerator-Rotors oder des Ringgenerator-Rotors weist typischerweise mehrere Meter auf, wobei der Luftspaltdurchmesser mindestens 3 oder sogar mehr als 5 Meter aufweist. Der Synchrongenerator bzw. der Ringgenerator weist eine Leistung von mindestens 100 Kilowatt, mindestens 500 Kilowatt oder vorzugsweise mindestens 1 Megawatt auf, die jedoch durchaus auch 3 MW oder bis zu 10 MW betragen kann.

## Patentansprüche

1. Polpaket für einen Läufer eines Synchrongenerators einer Windenergieanlage, wobei
- das Polpaket (10) mehrere Polpaketbleche (22) aufweist und jedes Polpaketblech (22) einen Polschaftbereich (20) und einen Polkopfbereich (18) umfasst, wobei
- der Polkopfbereich (18) über den Polschaftbereich (20) seitlich hinausragt und der Polkopfbereich (18) eine zum Polschaftbereich (20) hingewandte Seite (32) und eine vom Polschaftbereich (20) abgewandte Seite (30) aufweist und wobei
- die Kontur (31) des Polkopfbereichs (18) auf der vom Polschaftbereich (20) abgewandten Seite (30) ellipsenförmig ist,
**dadurch gekennzeichnet, dass**
die Kontur des Polkopfbereichs (18) auf der vom Polschaftbereich (20) abgewandten Seite (30) und zumindest ein daran anschließender Teil der Kontur (31) des Polkopfbereichs (18) der über den Polschaftbereich (20) hinausragenden und zum Polschaftbereich (20) hingewandten Seite (32) ellipsenförmig ist.

2. Windenergieanlage mit einem Synchrongenerator, insbesondere einem Ringgenerator, wobei
- der Synchrongenerator eine Leistung von mindestens 500 Kilowatt, einen Luftspaltdurchmesser von wenigstens drei Metern sowie einen Stator und einen Läufer aufweist und der Läufer mehrere Polpakete (10) nach Anspruch 1 aufweist.

3. Windenergieanlage nach Anspruch 2, wobei das Verhältnis der großen Halbachse (37) zur kleinen Halbachse (38) der durch die Kontur (31) des Polkopfbereichs beschriebenen Ellipse (18) einem Wert im Bereich von 4 bis 6 entspricht.

4. Windenergieanlage nach Anspruch 2 oder 3, wobei das Verhältnis der großen Halbachse (37) zur kleinen Halbachse (38) der durch die Kontur (31) des Polkopfbereichs beschriebenen Ellipse (18) einem Wert im Bereich von 4,8 bis 5,2, insbesondere 5,1, entspricht.

5. Windenergieanlage nach einem der Ansprüche 2 bis 4, wobei
das Polpaket (10) mehrere Polpaketsegmente (12, 14, 16) und jedes Polpaketsegment (12, 14, 16) jeweils ein oder mehrere Polpaketbleche (22) umfasst und
jeder Polschaftbereich (20) der Polpaketbleche (22) eine erste Mittellinie (39) und jeder Polkopfbereich (18) eine zweite Mittellinie (40) aufweist, wobei
der Abstand (44) zwischen der ersten Mittellinie (39) und der zweiten Mittellinie (40) in mindestens zwei benachbarten Polpaketsegmenten (12, 14, 16) unterschiedlich ist.

6. Windenergieanlage nach Anspruch 5, wobei die Anordnung der Polpaketsegmente (12, 14, 16) in der Draufsicht pfeilförmig und/oder spiegelsymmetrisch ausgestaltet ist.

7. Windenergieanlage nach einem der Ansprüche 2 bis 6, wobei ein Luftspalt zwischen dem Stator und dem Läufer in Umlaufrichtung im Bereich der Polpakete (10) eine inkonstante Weite aufweist.

8. Synchrongenerator, insbesondere für eine Windenergieanlage (100), insbesondere nach einem der Ansprüche 2 bis 7, mit einem Stator und einem Läufer mit einer Mehrzahl von Polpaketen (10) nach Anspruch 1, wobei ein Luftspalt zwischen dem Stator und dem Läufer in Umlaufrichtung im Bereich der Polpakete (10) eine inkonstante Weite aufweist.

## Claims

1. Pole pack for a rotor of a synchronous generator of a wind power plant, wherein
- the pole pack (10) has a plurality of pole pack laminations (22) and each pole pack lamination (22) comprises a pole shank region (20) and a pole head region (18), wherein
- the pole head region (18) projects laterally beyond the pole shank region (20), and the pole head region (18) has a side (32) which faces the pole shank region (20) and a side (30) which is averted from the pole shank region (20), and wherein
- the contour (31) of the pole head region (18) is ellipsoidal on that side (30) which is averted from the pole shank region (20)
**characterized in that**
the contour of the pole head region (18) on that side (30) which is averted from the pole shank region (20) and at least an adjoining portion of the contour (31) of the pole head region (18) which projects beyond the pole shank region (20) and faces the side (32) which faces the pole shank region (20) is ellipsoidal.

2. Wind power plant having a synchronous generator, in particular a ring generator, wherein
- the synchronous generator has a power of at least 500 kilowatts, an air gap diameter of at least three metres and also a stator and a rotor, and the rotor has a plurality of pole packs (10) according to claim 1.

3. Wind power plant according to claim 2, wherein
the ratio of the semi-major axis (37) in relation to the semi-minor axis (38) of the ellipse (18) which is described by the contour (31) of the pole head region corresponds to a value in the range of from 4 to 6.

4. Wind power plant according to one of the claim 2 or 3, wherein
the ratio of the semi-major axis (37) in relation to the semi-minor axis (38) of the ellipse (18) which is described by the contour (31) of the pole head region corresponds to a value in the range of from 4.8 to 5.2, in particular 5.1.

5. Wind power plant according to one of claims 2 to 4, wherein
the pole pack (10) comprises a plurality of pole pack segments (12, 14, 16) and each pole pack segment (12, 14, 16) in each case comprises one or more pole pack laminations (22), and
each pole shank region (20) of the pole pack laminations (22) has a first centre line (39) and each pole head region (18) has a second centre line (40), wherein
the distance (44) between the first centre line (39) and the second centre line (40) is different in at least two adjacent pole pack segments (12, 14, 16).

6. Wind power plant according to claim 5, wherein the arrangement of the pole pack segments (12, 14, 16) is in the shape of an arrow and/or mirror-symmetrical in plan view.

7. Wind power plant according to one of claims 2 to 6, wherein an air gap between the stator and the rotor has a non-constant width in the circumferential direction in the region of the pole packs (10).

8. Synchronous generator, in particular for a wind power plant (100), in particular according to one of claims 2 to 7, having a stator and a rotor with a plurality of pole packs (10) according to claim 1, wherein an air gap between the stator and the rotor has a non-constant width in the circumferential direction in the region of the pole packs (10).

## Revendications

1. Empilage de tôles polaires pour un rotor d'un générateur synchrone d'une éolienne, dans lequel
- l'empilage de tôles polaires (10) présente plusieurs tôles d'empilages de tôles polaires (22) et chaque tôle d'empilage de tôles polaires (22) comprend une zone de noyau polaire (20) et une zone de tête polaire (18), dans lequel
- la zone de tête polaire (18) dépasse latéralement au-delà de la zone de noyau polaire (20) et la zone de tête polaire (18) présente un côté (32) tourné en direction de la zone de noyau polaire (20) et un côté (30) opposé à la zone de noyau polaire (20) et dans lequel
- le contour (31) de la zone de tête polaire (18) sur le côté (30) opposé à la zone de noyau polaire (20) est en forme d'ellipse,
**caractérisé en ce que**
le contour de la zone de tête polaire (18) sur le côté (30) opposé à la zone de noyau polaire (20) et au moins une partie s'y raccordant du contour (31) de la zone de tête polaire (18) du côté (32) dépassant au-delà de la zone de noyau polaire (20) et tourné en direction de la zone de noyau polaire (20) sont en forme d'ellipse.

2. Eolienne avec un générateur synchrone, en particulier un générateur annulaire, dans laquelle
- le générateur synchrone présente une puissance d'au moins 500 kilowatts, un diamètre d'entrefer d'au moins 3 mètres ainsi qu'un stator et un rotor et le rotor présente plusieurs empilages de tôles polaires (10) selon la revendication 1.

3. Eolienne selon la revendication 2, dans laquelle le rapport entre le demi-axe de grande taille (37) et le demi-axe de petite taille (38) de l'ellipse (18) décrite par le contour (31) de la zone de tête polaire correspond à une valeur située dans la plage allant de 4 à 6.

4. Eolienne selon la revendication 2 ou 3, dans laquelle le rapport entre le demi-axe de grande taille (37) et le demi-axe de petite taille (38) de l'ellipse (18) décrite par le contour (31) de la zone de tête polaire correspond à une valeur située dans la plage allant de 4,8 à 5,2, en particulier de 5,1.

5. Eolienne selon l'une quelconque des revendications 2 à 4, dans laquelle
l'empilage de tôles polaires (10) comprend plusieurs segments d'empilage de tôles polaires (12, 14, 16) et chaque segment d'empilage de tôles polaires (12, 14, 16) comprend respectivement une ou plusieurs tôles d'empilage de tôles polaires (22), et
chaque zone de noyau polaire (20) des tôles d'empilage de tôles polaires (22) présente une première ligne centrale (39) et chaque zone de tête polaire (18) présente une deuxième ligne centrale (40), dans laquelle
la distance (44) entre la première ligne centrale (39) et la deuxième ligne centrale (40) est différente dans au moins deux segments d'empilage de tôles polaires (12, 14, 16) adjacents.

6. Eolienne selon la revendication 5, dans laquelle l'ensemble des segments d'empilage de tôles polaires (12, 14, 16) est configuré dans une vue d'en haut en forme de flèche et/ou avec une symétrie spéculaire.

7. Eolienne selon l'une quelconque des revendications 2 à 6, dans laquelle un entrefer entre le stator et le rotor présente, dans la direction périphérique, dans la zone des empilages de tôles polaires (10), une largeur inconstante.

8. Générateur synchrone, en particulier pour une éolienne (100), en particulier selon l'une quelconque des revendications 2 à 7, avec un stator et un rotor pourvu d'une multitude d'empilages de tôles polaires (10) selon la revendication 1, dans lequel un entrefer entre le stator et le rotor présente, dans la direction périphérique, dans la zone des empilages de tôles polaires (10), une largeur inconstante.
